# EUROPÄISCHE PATENTANMELDUNG

(11) **EP 2 387 119 A1**
(43) Veröffentlichungstag der Anmeldung: **16.11.2011**
(21) Anmeldenummer: 10187223.2
(22) Anmeldetag: 12.10.2010
(51) Int. Cl.: H02G 3/08, H04Q 1/14, H04L 12/28

(54) **Netzwerkverteiler mit Kaskaden-Schaltung**

(30) Priorität: 11.05.2010 DE 202010006706 U
(71) Anmelder: GIRA Giersiepen GmbH & Co. KG, 42477 Radevormwald (DE)
(72) Erfinder: Cautillo, Luca, 42119 Wuppertal (DE); Engels, Ralf, 51381 Leverkusen (DE)
(74) Vertreter: Patentanwälte Dr. Solf & Zapf

(57) **Zusammenfassung**

Die vorliegende Erfindung betrifft einen Netzwerkverteiler (1) zum Einbau insbesondere in eine Unter- oder Aufputzdose für die Gebäudeinstallationstechnik, insbesondere für ein Ethernet-Netzwerk. Der Netzwerkverteiler (1) umfasst mindestens ein Geräteanschlusselement (V1) zum Anschluss eines Benutzergerätes (2) und mindestens ein Gebäudeanschlusselement (A1) zum Anschluss eines Gebäudenetzwerks sowie einen Netzwerkswitch (4) und mindestens zwei Gebäudeanschlusselemente (A1, A2), wobei das Geräteanschlusselement (V1) und die Gebäudeanschlusselemente (A1, A2) mit mindestens einem Port des Netzwerkswitches (4) verbunden sind.

## Beschreibung

Die vorliegende Erfindung bezieht sich auf einen Netzwerkverteiler zum Einbau insbesondere in eine Unter- oder Aufputzdose für die Gebäudeinstallationstechnik, insbesondere für ein Ethernet-Netzwerk, mit mindestens einem Geräteanschlusselement zum Anschluss eines Benutzergerätes und mindestens einem Gebäudeanschlusselement zum Anschluss eines Gebäudenetzwerks.

Derartige Netzwerkverteiler werden z.B. in Unter- oder Aufputzdosen bei der Verlegung von Datennetzen, insbesondere von Ethernet, in Gebäuden verwendet, wobei jeder Netzwerkverteiler mindestens einen Anschluss für ein Netzwerkelement, wie z.B. einen Computer, zur Verfügung stellen kann.

Bei bekannten Netzwerkverteilern werden die Netzwerkverteiler sternförmig mit einem Port eines zentralen Netzwerkelementes, wie z.B. einem Netzwerkswitch, Netzwerkhub oder Netzwerkrouter über ein Gebäudeanschlusselement elektrisch verbunden, so dass die an dem Geräteanschlusselement des Netzwerkverteilers angeschlossenen Benutzergeräte über das zentrale Netzwerkelement miteinander logisch verbunden sind. Hierbei ist in der Regel das zentrale Netzwerkelement mit einem anderen übergeordneten Netzwerk, wie zum Beispiel dem Internet oder einem übergeordneten Gebäudenetzwerk, verbunden. Das Gebäudeanschlusselement ist z.B. eine RJ-45 Buchse zum Anschluss eines in der Regel in den Gebäudewänden verlegten Netzwerkkabels mit einem RJ-45 Stecker oder eine Gruppe von Kabelklemmen zum Verbinden der einzelnen Adern eines verlegten Netzwerkkabels ohne Stecker. Das Geräteanschlusselement ist z.B. eine RJ-45 Buchse zum Anschließen eines Ethernetkabels mit dem Benutzergerät. Die bekannten Netzwerkverteiler können auch mehrere Geräteanschlusselemente aufweisen, so dass mehrere Benutzergeräte an einen Netzwerkverteiler angeschlossen werden können, wobei dann auch mehrere Gebäudeanschlusselemente vorhanden sind und jedes Geräteanschlusselement mit einem Gebäudeanschlusselement direkt elektrisch und über jeweils ein Netzwerkkabel mit jeweils einem Port des zentralen Netzwerkelementes elektrisch verbunden ist. Die bekannten Netzwerkverteiler haben insbesondere den Nachteil, dass sie sternförmig mit dem zentralen Netzwerkelement verbunden werden müssen. Dies erfordert eine aufwändige Verlegung der Kabel in den Wänden eines vernetzten Gebäudes. Außerdem wird die Position des zentralen Netzwerkelementes durch die sternförmige Verkabelung in dem Gebäude fest bestimmt, was die Flexibilität bei zukünftigen Veränderungen der Netzwerkanforderungen einschränkt.

Der Erfindung liegt daher die Aufgabe zugrunde, eine Lösung zu schaffen, die es ermöglicht, die Verkabelung eines Gebäudes zu vereinfachen und eine Flexibilität in Bezug auf die Anordnung des Netzwerkelementes, das die übergeordnete Netzwerkverbindung zur Verfügung stellt, zu schaffen.

Bei einem Netzwerkverteiler der eingangs beschriebenen Art wird die Aufgabe erfindungsgemäß dadurch gelöst, dass der Netzwerkverteiler mindestens einen Netzwerkswitch und mindestens zwei Gebäudeanschlusselemente aufweist, wobei das Geräteanschlusselement und die Gebäudeanschlusselemente mit mindestens einem Port des Netzwerkswitches verbunden sind. Dies ermöglicht eine Kaskaden- und/oder eine Ring-Schaltung der Netzwerkverteiler miteinander, so dass z.B. in einem Raum oder auf einer Etage eines Gebäudes nur ein Netzwerkverteiler mit dem übergeordneten Netzwerkelement verbunden wird und alle anderen Netzwerkverteiler in dem Raum oder auf der Etage des Gebäudes nur mit einem weiteren Netzwerkverteiler seriell verbunden werden. Dies ermöglicht eine Einsparung der Kabelverbindungen in den Wänden. Außerdem muss der Anschluss des übergeordneten Netzwerkelementes nicht mehr durch die verlegten Kabel vorbestimmt sein, da das übergeordnete Netzwerkelement an jeder Netzwerksteckdose angeschlossen werden kann.

In einer Ausführungsform der Erfindung ist jeweils zwischen zwei Gebäudeanschlusselementen ein Analogschalter geschaltet, der die Gebäudeanschlusselemente direkt miteinander verbinden kann, wobei der Analogschalter derart ausgebildet ist, dass er eine Störung des Netzwerkswitches detektiert und bei einer Störung des Netzwerkswitches die direkte Verbindung zwischen den Gebäudeanschlusselementen herstellt und bei einem störungsfreiem Betrieb des Netzwerkswitches die direkte Verbindung zwischen den Gebäudeanschlusselementen trennt. Dies hat den Vorteil, dass bei einem Ausfall des Netzwerkswitches in einer der Netzwerkverteiler der ausgefallene Netzwerkswitch überbrückt wird. Die dahinter in Serie verbundenen Netzwerkverteiler werden dadurch weiterhin mit der vor dem defekten Netzwerkverteiler liegenden Netzwerkverteiler verbunden.

Weiterhin vorteilhaft ist es, wenn die Gebäudeanschlusselemente über den Analogschalter mit den Ports des Netzwerkswitches verbunden sind, und der Analogschalter derart ausgebildet ist, dass er bei einer Störung des Netzwerkswitches die Gebäudeanschlusselemente von den jeweiligen Ports des Netzwerkswitches trennt, und bei einem störungsfreien Betrieb des Netzwerkswitches die Gebäudeanschlusselemente mit den jeweiligen Ports des Netzwerkswitches verbindet. Dies dient der Qualität und Verfügbarkeit der Netzwerkverbindung, da hierdurch Störeinflüsse durch einen defekten Netzwerkswitch auf die Gebäudeanschlusselemente und dadurch auf das Netzwerk vermieden werden können. Außerdem ermöglicht dies auch eine Verbindung von einer Steuerungselektronik des Analogschalters mit den Ports des Netzwerkswitches, um die Portspannungen zu messen.

Zur weiteren Ausgestaltung der Erfindung sind mindestens drei Gebäudeanschlusselemente vorhanden, und die Gebäudeanschlusselemente sind jeweils in zwei Teilanschlusselemente aufgeteilt, und jedes der Teilanschlusselemente außer einem Teilanschlusselement ist zur Übertragung der Signale einer physikalischen Netzwerkverbindung mit jeweils einem Port des Netzwerkswitches verbunden. Dies ermöglicht eine Mesh- und/oder eine Baum-Schaltung der Netzwerksteckdosen untereinander, was wiederum den Vorteil hat, dass die Verfügbarkeit des Netzwerks verbessert werden kann und längere Latenzzeiten, die durch eine serielle Schaltung der Netzwerkverteiler entstehen könnte, verkürzt werden können.

Das Teilanschlusselement, das nicht mit einem Port des Netzwerkswitches verbunden ist, dient dabei einer Fallbacklösung bei einer Störung des Netzwerkswitches. Vorteilhafterweise wird die Fallbacklösung dadurch ermöglicht, dass die Gebäudeanschlusselemente aus einer RJ-45 Buchse oder einer Kabelklemme mit acht Leiteranschlüssen bestehen, und dass für jedes Gebäudeanschlusselement das erste Teilanschlusselement aus den Kontakten 1, 2, 3 und 6 des Gebäudeanschlusselements und das zweite Teilanschlusselement aus den Kontakten 4,5,7 und 8 des Gebäudeanschlusselementes gebildet wird. Außerdem ist zwischen dem ersten Teilanschlusselement des ersten Gebäudeanschlusselementes und dem ersten Teilanschlusselement des zweiten Gebäudeanschlusselementes, und zwischen dem zweiten Teilanschlusselement des ersten Gebäudeanschlusselementes und dem ersten Teilanschlusselement des dritten Gebäudeanschlusselementes ein Analogschalter geschaltet, der die jeweiligen Teilanschlusselemente direkt miteinander verbinden kann. Dabei ist der Analogschalter derart ausgebildet, dass er eine Störung des Netzwerkswitches detektiert und bei einer Störung des Netzwerkswitches die direkten Verbindungen zwischen den Teilanschlusselementen herstellt und bei einem störungsfreien Betrieb des Netzwerkswitches die direkten Verbindungen zwischen den Teilanschlusselementen trennt. Dies hat den Vorteil, dass auch bei einer Mesh- oder Baumschaltung bei einem Ausfall des Netzwerkswitches in einer der Netzwerkverteiler der ausgefallene Netzwerkswitch überbrückt wird und die Mesh- oder Baumverbindungen zu den anderen Netzwerkverteilern bestehen bleiben.

Die vorgenannten sowie beanspruchten und in den Ausführungsbeispielen beschriebenen erfindungsgemäß zu verwendenden Bauteile unterliegen in ihrer Größe, Form, Gestaltung, Materialauswahl und technischen Konzeptionen keinen besonderen Ausnahmebedingungen, so dass die in dem Anwendungsgebiet bekannten Auswahlkriterien uneingeschränkt Anwendung finden können.

Weitere Einzelheiten, Merkmale und vorteilhafte Weiterbildungen der Erfindung ergeben sich aus den im Folgenden beschriebenen und in den Zeichnungen dargestellten Ausführungsbeispielen sowie aus den Unteransprüchen. Es zeigen:
Fig. 1 eine schematische Darstellung einer ersten Ausführungsform eines erfindungsgemäßen Netzwerkverteilers mit zwei Gebäudeanschlusselementen und einem Geräteanschlusselement,
Fig. 2 eine schematische Darstellung einer Ring-Schaltung von erfindungsgemäßen Netzwerkverteilern der ersten Ausführungsform,
Fig. 3 eine schematische Darstellung einer zweiten Ausführungsform eines erfindungsgemäßen Netzwerkverteilers mit drei Gebäudeanschlusselementen und einem Geräteanschlusselement,
Fig.4 eine schematische Darstellung einer Mesh-Schaltung von erfindungsgemäßen Netzwerkverteilern der zweiten Ausführungsform und
Fig. 5 eine schematische Darstellung einer Baum-Schaltung von erfindungsgemäßen Netzwerkverteilern der zweiten Ausführungsform.

Gleiche Merkmale in den verschiedenen Figuren sind mit denselben Bezugszeichen versehen.

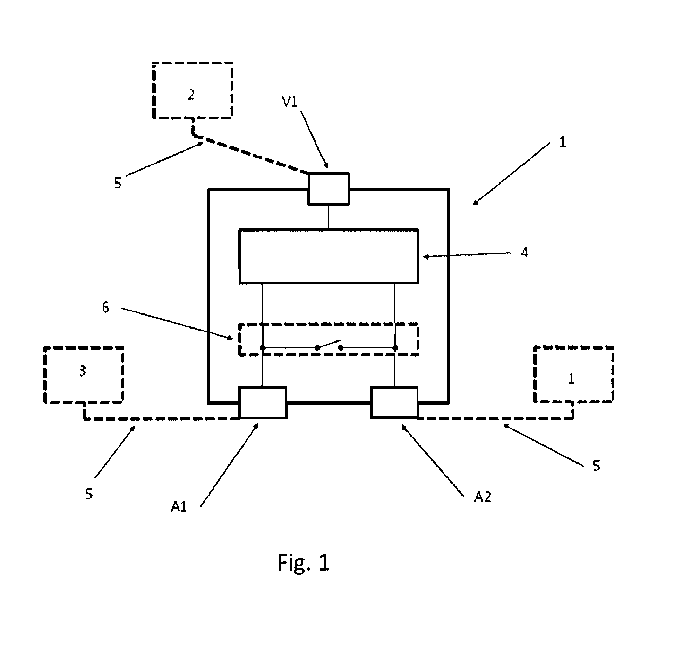

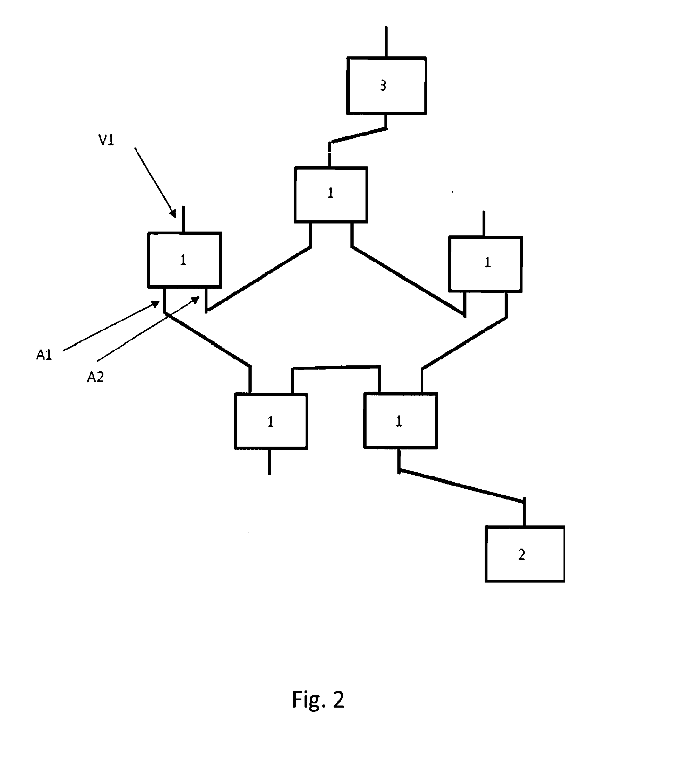

In Fig. 1 ist eine erste Ausführungsform eines erfindungsgemäßen Netzwerkverteilers 1 schematisch dargestellt. Der Netzwerkverteiler 1 kann beispielhaft in einer Unter-oder Aufputzdose für die Gebäudeinstallationstechnik, insbesondere für ein Ethernet-Netzwerk angeordnet sein. Der Netzwerkverteiler 1 weist mindestens ein Geräteanschlusselement V1 auf, das zum Beispiel aus einer RJ-45 Buchse besteht und zur Verbindung eines Benutzergerätes 2, wie zum Beispiel eines Computers, oder eines übergeordneten Netzwerkelementes 3, wie zum Beispiel eines Internetrouters, mittels eines Netzwerkkabels 5, insbesondere eines Ethernetkabels mit RJ-45 Stecker, dient. Außerdem weist der Netzwerkverteiler 1 zwei Gebäudeanschlusselemente A1, A2 auf, die zum Beispiel jeweils aus einer RJ-45 Buchse zur Aufnahme des RJ-45 Steckers des Ethernetkabels oder einer Gruppe von Kabelklemmen zur Befestigung der Adern eines Netzwerkkabels 5 ohne Stecker bestehen. Die Gebäudeanschlusselemente A1, A2 dienen zur Verbindung des Geräteanschlusselementes V1 mit einem übergeordneten Netzwerkelement 3 oder einem weiteren Netzwerkverteiler 1 (siehe auch Fig.2).

In dem Netzwerkverteiler 1 ist ein Netzwerkswitch 4 angeordnet, wobei der Netzwerkswitch 4 jeweils einen Port für jedes Geräteanschlusselement V1 und jeweils einen Port für jedes Gebäudeanschlusselement A1, A2 aufweist und das Geräteanschlusselement V1 und die zwei Gebäudeanschlusselemente A1, A2 mit jeweils einem Port des Netzwerkswitches 4 elektrisch verbunden sind. Der Netzwerkswitch 4 stellt somit die logische Netzwerkverbindung zwischen den Gebäudeanschlusselementen A1, A2 untereinander als auch zwischen den einzelnen Gebäudeanschlusselementen A1, A2 jeweils mit dem Geräteanschlusselement V1 zur Verfügung. Die einzelnen Netzwerkverteiler 1 können dadurch über die Gebäudeanschlusselemente A1, A2 seriell beziehungsweise kaskadiert geschaltet werden. Dies ermöglicht den Verzicht auf eine sternförmige Verkabelung der einzelnen Netzwerkverteiler 1 mit einem zentralen Netzwerkelement. Zudem kann ein übergeordnetes Netzwerkelement 3, wie zum Beispiel ein Internetrouter, der die Netzwerkverbindung zu einem übergeordneten Netzwerk zur Verfügung stellt, an einen beliebigen Netzwerkverteiler 1 im Netzwerk über das Geräteanschlusselement V1 angeschlossen werden. Somit ist eine volle Flexibilität in Bezug auf die Positionierung eines solchen übergeordneten Netzwerkelementes 3 gegeben.

Vorzugsweise befindet sich in dem Netzwerkverteiler 1 ein Analogschalter 6, der eine Störung des Netzwerkswitches 4 detektiert. Der Analogschalter 6 besteht insbesondere aus einem oder mehreren Relais, die mittels einer Steuerungselektronik geschaltet werden. Insbesondere misst die Steuerungselektronik eine oder mehrere Portspannungen des Netzwerkswitches 4 und detektiert dadurch einen Störfall des Netzwerkswitches 4 und schaltet die Relais dementsprechend. Der Analogschalter 6 ist zwischen den Gebäudeanschlusselementen A1, A2 geschaltet und derart ausgebildet, dass er die beiden Gebäudeanschlusselemente A1, A2 direkt miteinander verbinden kann. Hierbei trennt der Analogschalter 6 bei störungsfreiem Betrieb des Netzwerkswitches 4 die direkte Verbindung der Gebäudeanschlusselemente A1, A2. Bei einer Störung beziehungsweise einem Ausfall des Netzwerkswitches 4 werden die Gebäudeanschlusselemente A1, A2 durch den Analogschalter 6 direkt verbunden, so dass die Verbindungen der einzelnen Gebäudeanschlusselemente A1, A2 zu dem Netzwerkswitch 4 überbrückt werden. Dadurch ist nur das Benutzergerät 2, welches über das Geräteanschlusselement V1 mit dem defekten Netzwerkswitch 4 verbunden ist, vom Netzwerk abgeschnitten. Alle anderen, über die Gebäudeanschlusselemente A1, A2 verbundenen Netzwerkverteiler 1 sind weiterhin mit dem Netzwerk verbunden. Ohne einen solchen erfindungsgemäßen Analogschalter 6 würden alle Netzwerkverteiler, die hinter dem defekten Netzwerkverteiler 1 geschaltet sind, beziehungsweise die an diesen Netzwerkverteilern 1 angeschlossenen Netzwerkelemente, vom Netzwerk getrennt. Somit wird die Verfügbarkeit des Netzwerkes für eine serielle beziehungsweise kaskadierte Schaltung der Netzwerkverteiler 1 durch den Analogschalter 6 verbessert.

In einer weiteren nicht dargestellten vorteilhaften Ausgestaltung der Erfindung sind die Gebäudeanschlusselemente A1, A2 zusätzlich über den Analogschalter 6 mit den Ports des Netzwerkswitches 4 verbunden. Dabei ist der Analogschalter 6 derart ausgebildet, dass er bei einer Störung des Netzwerkswitches 4 die Gebäudeanschlusselemente A1, A2 von den jeweiligen Ports des Netzwerkswitches 4 trennt, und bei einem störungsfreien Betrieb des Netzwerkswitches 4 die Gebäudeanschlusselemente A1, A2 mit den jeweiligen Ports des Netzwerkswitches 4 verbindet. Dies dient der Qualität und Verfügbarkeit der Netzwerkverbindung, da hierdurch Störeinflüsse durch einen defekten Netzwerkswitch 4 auf die Gebäudeanschlusselemente A1, A2 und dadurch auf das Netzwerk vermieden werden können. Außerdem ermöglicht dies auch eine Verbindung der Steuerungselektronik des Analogschalters 6 mit den Ports des Netzwerkswitches 4, um die Portspannungen zu messen.

In Fig. 2 ist eine Ring-Schaltung von erfindungsgemäßen Netzwerkverteilern 1 dargestellt. Dies stellt eine besondere Variante der seriellen bzw. kaskadierten Schaltung von erfindungsgemäßen Netzwerkverteilern 1 dar. Um eine derartige Ringschaltung zu ermöglichen, sind die Netzwerkswitches 4 der einzelnen Netzwerkverteiler 1 so konfiguriert, dass sie ein Datenpaket nur bis zu einer gewissen Anzahl von weiteren Netzwerkswitches (Hops) in den anderen Netzwerkverteilern 1, insbesondere (N -1) Hops (N = Anzahl der verschalteten Netzwerkverteiler 1), weiterleiten, so dass eine Weiterleitung eines Datenpakets innerhalb des Ringes begrenzt wird. Eine derartige Ring-Schaltung hat den weiteren Vorteil, dass bei einer Unterbrechung einer Kabelverbindung zwischen zwei erfindungsgemäßen Netzwerkverteilern 1 weiterhin eine Verbindung zu allen Netzwerkverteilern 1 zur Verfügung steht, da sich die Datenpakete in beide Richtungen innerhalb des Ringes bewegen können.

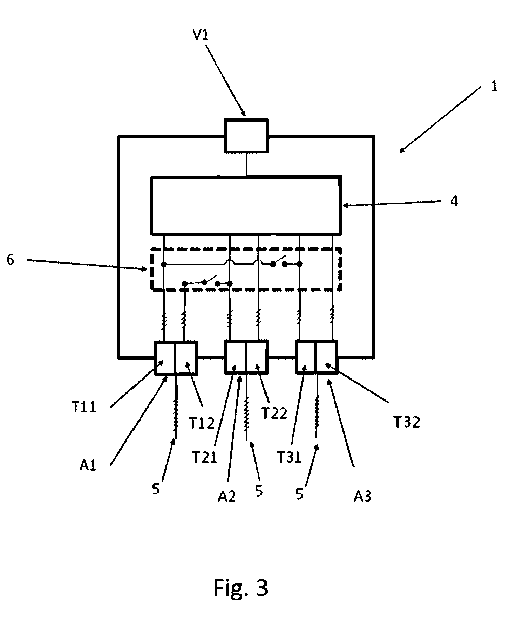

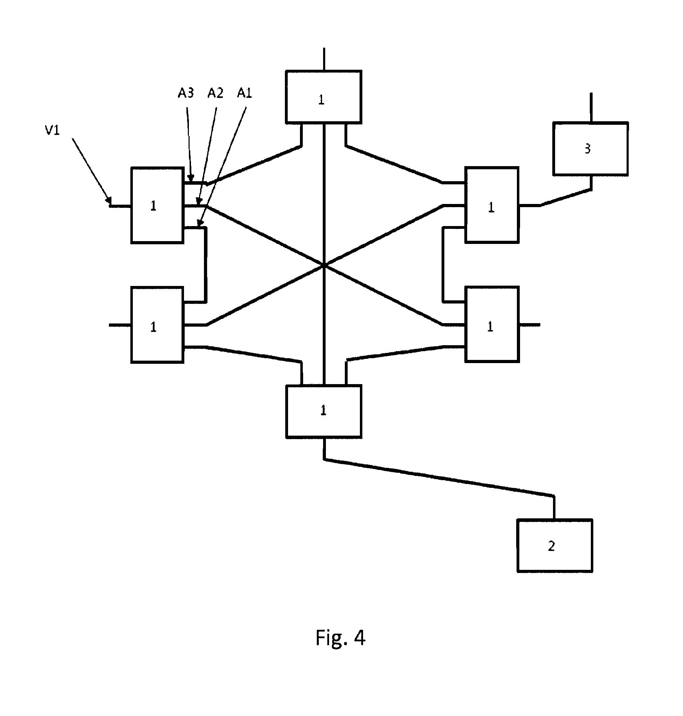

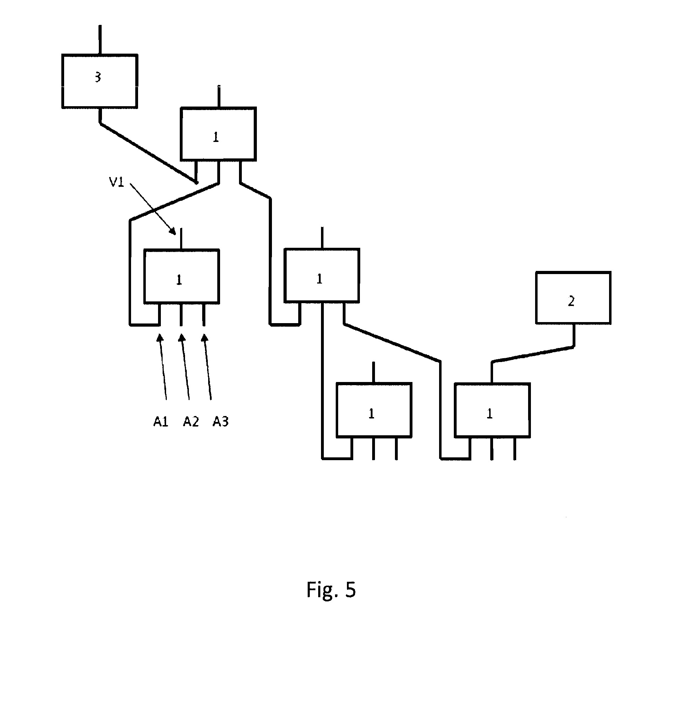

Die in Fig. 3 gezeigte zweite Ausführungsform eines erfindungsgemäßen Netzwerkverteilers 1 weist mindestens ein Geräteanschlusselement V1 und mindestens drei Gebäudeanschlusselemente A1, A2, A3 und mindestens einen Netzwerkswitch 4 auf, wobei die Gebäudeanschlusselemente A1, A2, A3 mit jeweils mindestens einem Port des Netzwerkswitches 4 verbunden sind. Dies ermöglicht zusätzlich zur seriellen und/oder Ring-Schaltung auch eine Mesh-Schaltung (siehe Fig. 5) und/oder eine Baum-Schaltung (siehe Fig. 4) der Netzwerkverteiler 1 untereinander, was wiederum den Vorteil hat, dass die Verfügbarkeit und die Qualität des Netzwerks verbessert werden kann und längere Latenzzeiten, die durch eine serielle Schaltung der Netzwerkverteiler entstehen könnten, verkürzt werden können, indem die Anzahl der benötigten kaskadierten Netzwerkswitches 4 in einem Netzwerk für eine bestimmte logische Netzwerkverbindung vermindert wird.

Um zusätzlich die Ausfallsicherheit des Netzwerkes zu verbessern, werden bei dem in Fig. 3 dargestellten Netzwerkverteiler 1 die Gebäudeanschlusselemente A1, A2, A3 in einer speziellen Weise mit den Netzwerkkabeln 5 verbunden. Standard-Ethernetkabel haben acht Adern, wobei für eine physikalische Ethernet-Verbindung bei Geschwindigkeiten bis zu 100 Mbit/s (z.B.100BaseTX) lediglich vier Adern in einem Kabel verwendet werden. Die vier freien Adern im Netzwerkkabel 5 werden bei der zweiten Ausführungsform des Netzwerkverteilers 1 genutzt, um eine zweite physikalische Ethernetverbindung pro Netzwerkkabel 5 parallel zu übertragen. Bei einer standardisierten Verbindung eines Standard-Ethernetkabels mit einem RJ-45 Stecker liegt das (TX+)-Signal auf Position 1, das (TX-)-Signal auf Position 2, das (RX+)-Signal auf Position 3 und das (RX-)-Signal auf Position 6 des RJ-45 Steckers. Bei dem erfindungsgemäßen Netzwerkverteiler 1 werden die Signale der zweiten physikalischen Ethernetverbindung auf die freien Positionen 4, 5, 7 und 8 der Gebäudeanschlusselemente A1, A2, A3 gelegt, so dass das (TX+)-Signal auf Position 4, das (TX-)-Signal auf Position 5, das (RX+)-Signal auf Position 7 und das (RX-)-Signal auf Position 8 des RJ-45 Steckers liegt.

In dem beschriebenen zweiten Ausführungsbeispiel weisen die Gebäudeanschlusselemente A1, A2, A3 die doppelte Anzahl von für eine physikalische Netzwerkverbindung benötigten Adern auf. Insbesondere bestehen sie aus einer RJ-45 Buchse mit acht Kontakten oder einer Kabelklemme mit acht Leiteranschlüssen, so dass sie zwei physikalische Netzwerkverbindungen, wie oben beschrieben, verbinden können. Vorteilhafterweise sind die Gebäudeanschlusselemente A1, A2, A3 jeweils in zwei Teilanschlusselemente T11, T12, T21, T22, T31, T32 aufgeteilt. Dabei ist das Gebäudeanschlusselement A1 in die Teilanschlusselemente T11 und T12, das Gebäudeanschlusselement A2 in die Teilanschlusselemente T21 und T22 und das Gebäudeanschlusselement A3 in die Teilanschlusselemente T31 und T32 aufgeteilt. Die Teilanschlusselemente T11, T12, T21, T22, T31, T32 können dabei auch nur eine logische Einteilung der Kontakte der Gebäudeanschlusselemente A1, A2, A3 sein. Die Kontakte von jedem Gebäudeanschlusselement A1, A2, A3 sind derart in zwei Teilanschlusselemente T11, T12, T21, T22, T31, T32 aufgeteilt, dass an jedem Teilanschlusselement T11, T12, T21, T22, T31, T32 jeweils eine physikalische Netzwerkverbindung des Ethernetkabels anliegt. Das bedeutet zum Beispiel, dass für die acht Kontakte des Gebäudeanschlusselementes A1 die Kontakte mit Position 1, 2, 3 und 6 mit dem Teilanschlusselement T11, und die Kontakte mit der Position 4, 5, 7 und 8 mit dem Teilanschlusselement T12 verbunden sind. Das Teilanschlusselement T11 des Gebäudeanschlusselementes A1 und die Teilanschlusselemente T21, T22, T31, T32 der anderen Gebäudeanschlusselemente A2, A3 sind mit jeweils einem Port des Netzwerkswitches 4 verbunden. Das Teilanschlusselement T12 ist nicht mit einem Port des Netzwerkswitches 4 verbunden, sondern dient nur als Fallbacklösung für den Fall einer Störung im Netzwerkswitch 4.

Dafür ist es zusätzlich vorteilhaft, wenn zwischen dem ersten Teilanschlusselement T11 des ersten Gebäudeanschlusselementes A1 und dem ersten Teilanschlusselement T21 des zweiten Gebäudeanschlusselementes A2, und zwischen dem zweiten Teilanschlusselement T12 des ersten Gebäudeanschlusselementes A1 und dem ersten Teilanschlusselement T31 des dritten Gebäudeanschlusselementes A3 jeweils ein Analogschalter 6 geschaltet ist, der die jeweiligen Teilanschlusselemente T11 , T12, T31, T21 direkt miteinander verbinden kann. Es ist hier nicht ausschlaggebend, welches der drei Gebäudeanschlusselemente A1, A2, A3 als das erste, zweite oder dritte Gebäudeanschlusselement gewählt wird, sondern ausschlaggebend ist, dass beide Teilanschlusselemente T11, T12, T21, T22, T31, T32 eines Gebäudeanschlusselementes A1, A2, A3, welches lediglich mit einem Port des Netzwerkswitches 4 verbunden ist, jeweils mit den Teilanschlusselementen T11, T12, T21, T22, T31, T32 von unterschiedlichen anderen Gebäudeanschlusselementen A1, A2, A3 verbunden sind, die jeweils mit den Kontakten der Standard-Netzwerkverbindung, d.h. für Ethernet mit den Kontakten 1, 2, 3 und 6 des zugehörigen Gebäudeanschlusselementes verbunden sind. Andere Ausführungsformen könnten somit die Verschaltung auch in einer anderen Reihenfolge der Gebäudeanschlusselemente A1, A2, A3 bzw. der Teilanschlusselemente T11, T12, T21, T22, T31, T32 durchführen.

Der Analogschalter 6 ist derart ausgebildet, dass er eine Störung des Netzwerkswitches 4 detektiert und bei einer Störung des Netzwerkswitches 4 die direkten Verbindungen zwischen den Teilanschlusselementen T11, T12, T21, T31 herstellt und bei einem störungsfreiem Betrieb des Netzwerkswitches 4 die direkten Verbindungen der Teilanschlusselemente T11, T12, T21, T31 trennt. Dies ermöglicht, dass im Störungsfalls weiterhin eine Netzwerkverbindung der beiden parallelen Netzwerkverbindungen in den Netzwerkkabeln bestehen bleibt, so dass ein Ausfall eines Netzwerkswitches 4 in einem Netzwerkverteiler 1 das Netzwerk mit Ausnahme des Ausfalls des Geräteanschlusselements V1 nicht beeinträchtigt.

Vorteilhafterweise sind die Teilanschlusselemente T11, T12, T21, T22, T31, T32 über den Analogschalter 6 mit den Ports des Netzwerkswitches 4 verbunden, und der Analogschalter 6 ist derart ausgebildet, dass er bei einer Störung des Netzwerkswitches 4 die Teilanschlusselemente T11, T12, T21, T22, T31, T32 von den jeweiligen Ports des Netzwerkswitches 4 trennt, und bei störungsfreiem Betrieb des Netzwerkswitches 4 die Teilanschlusselemente T11, T12, T21, T22, T31, T32 mit den jeweiligen Ports des Netzwerkswitches 4 verbindet. Dies dient, wie schon bei der ersten Ausführungsform, der Qualität und Verfügbarkeit der Netzwerkverbindung, da hierdurch Störeinflüsse durch einen defekten Netzwerkswitch 4 auf die Gebäudeanschlusselemente A1, A2, A3 und dadurch auf das Netzwerk vermieden werden können. Außerdem ermöglicht dies auch eine Verbindung der Steuerungselektronik des Analogschalters 6 mit den Ports des Netzwerkswitches 4, um die Portspannungen zu messen.

Die Erfindung ist nicht auf die dargestellten und beschriebenen Ausführungsbeispiele beschränkt, sondern umfasst auch alle im Sinne der Erfindung gleichwirkenden Ausführungen. Ferner ist die Erfindung bislang auch noch nicht auf die in dem jeweiligen unabhängigen Anspruch definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des jeweiligen unabhängigen Anspruchs weggelassen bzw. durch mindestens ein an anderer Stelle der Anmeldung offenbartes Einzelmerkmal ersetzt werden kann. Insofern sind die Ansprüche lediglich als ein erster Formulierungsversuch für die jeweilige Erfindung zu verstehen.

## Patentansprüche

1. Netzwerkverteiler (1) zum Einbau insbesondere in eine Unter- oder Aufputzdose für die Gebäudeinstallationstechnik, insbesondere für ein Ethernet-Netzwerk, mit mindestens einem Geräteanschlusselement (V1) zum Anschluss eines Benutzergerätes (2) und mindestens einem Gebäudeanschlusselement (A1) zum Anschluss eines Gebäudenetzwerks,
**gekennzeichnet durch** einen Netzwerkswitch (4) und mindestens zwei Gebäudeanschlusselemente (A1, A2) wobei das Geräteanschlusselement (V1) und die Gebäudeanschlusselemente (A1, A2) mit mindestens einem Port des Netzwerkswitches (4) verbunden sind.

2. Netzwerkverteiler (1) nach Anspruch 1,
**dadurch gekennzeichnet, dass** jeweils zwischen zwei Gebäudeanschlusselemente (A1, A2) ein Analogschalter (6) geschaltet ist, der die Gebäudeanschlusselemente (A1, A2) direkt miteinander verbinden kann.

3. Netzwerkverteiler (1) nach Anspruch 2,
**dadurch gekennzeichnet, dass** der Analogschalter (6) derart ausgebildet ist, dass er eine Störung des Netzwerkswitches (4) detektiert und bei einer Störung des Netzwerkswitches (4) die direkte Verbindung zwischen den Gebäudeanschlusselementen (A1, A2) herstellt und bei einem störungsfreiem Betrieb des Netzwerkswitches (4) die direkte Verbindung zwischen den Gebäudeanschlusselementen (A1, A2) trennt.

4. Netzwerkverteiler (1) nach Anspruch 3,
**dadurch gekennzeichnet, dass** die Gebäudeanschlusselemente (A1, A2) über den Analogschalter (6) mit den Ports des Netzwerkswitches (4) verbunden sind, und der Analogschalter (6) derart ausgebildet ist, dass er bei einer Störung des Netzwerkswitches (4) die Gebäudeanschlusselemente (A1, A2) von den jeweiligen Ports des Netzwerkswitches (4) trennt, und bei einem störungsfreiem Betrieb des Netzwerkswitches (4) die Gebäudeanschlusselemente (A1, A2) mit den jeweiligen Ports des Netzwerkswitches (4) verbindet.

5. Netzwerkverteiler (1) nach Anspruch 1,
**dadurch gekennzeichnet, dass** mindestens drei Gebäudeanschlusselemente (A1, A2, A3) vorhanden sind, und die Gebäudeanschlusselemente (A1, A2, A3) jeweils in zwei Teilanschlusselemente (T11, T12, T21, T22, T31, T32) aufgeteilt sind, und jedes der Teilanschlusselemente (T11, T12, T21, T22, T31, T32) außer einem Teilanschlusselement (T11, T12, T21, T22, T31, T32) zur Übertragung der Signale einer physikalischen Netzwerkverbindung mit jeweils einem Port des Netzwerkswitches (4) verbunden ist.

6. Netzwerkverteiler (1) nach Anspruch 5,
**dadurch gekennzeichnet, dass** die Gebäudeanschlusselemente (A1, A2, A3) aus einer RJ-45 Buchse oder einer Kabelklemme mit acht Leiteranschlüssen bestehen, und dass für jedes Gebäudeanschlusselement (A1, A2, A3) das erste Teilanschlusselement (T11, T21, T31) aus den Kontakten 1, 2, 3 und 6 des Gebäudeanschlusselements (A1, A2, A3) gebildet wird und das zweite Teilanschlusselement (T12, T22, T32) aus den Kontakten 4, 5, 7 und 8 des Gebäudeanschlusselementes (A1, A2, A3) gebildet wird.

7. Netzwerkverteiler (1) nach Anspruch 6,
**dadurch gekennzeichnet, dass** zwischen dem ersten Teilanschlusselement (T11) des ersten Gebäudeanschlusselementes (A1) und dem ersten Teilanschlusselement (T21) des zweiten Gebäudeanschlusselementes (A2) und zwischen dem zweiten Teilanschlusselement (T12) des ersten Gebäudeanschlusselementes (A1) und dem ersten Teilanschlusselement (T31) des dritten Gebäudeanschlusselementes (A3) jeweils ein Analogschalter (6) geschaltet ist, der die jeweiligen Teilanschlusselemente (T11 , T12, T31, T21) direkt miteinander verbinden kann.

8. Netzwerkverteiler (1) nach Anspruch 7,
**dadurch gekennzeichnet, dass** der Analogschalter (6) derart ausgebildet ist, dass er eine Störung des Netzwerkswitches (4) detektiert und bei einer Störung des Netzwerkswitches (4) die direkten Verbindungen zwischen den Teilanschlusselementen (T11, T12, T21, T31) herstellt und bei einem störungsfreien Betrieb des Netzwerkswitches (4) die direkten Verbindungen zwischen den Teilanschlusselementen (T11, T12, T21, T31) trennt.

9. Netzwerkverteiler (1) nach Anspruch 8,
**dadurch gekennzeichnet, dass** die Teilanschlusselemente (T11, T12, T21, T22, T31, T32) über den Analogschalter (6) mit den Ports des Netzwerkswitches (4) verbunden sind, und der Analogschalter (6) derart ausgebildet ist, dass er bei einer Störung des Netzwerkswitches (4) die Teilanschlusselemente (T11, T12, T21, T22, T31, T32) von den jeweiligen Ports des Netzwerkswitches (4) trennt, und bei störungsfreiem Betrieb des Netzwerkswitches (4) die Teilanschlusselemente (T11, T12, T21, T22, T31, T32) mit den jeweiligen Ports des Netzwerkswitches (4) verbindet.

10. Netzwerkverteiler (1) nach einem der Ansprüche 3, 4 oder 7 bis 9,
**dadurch gekennzeichnet, dass** der Analogschalter (6) aus einem oder mehreren Relais besteht und mittels einer Steuerungselektronik eine oder mehrere Portspannungen des Netzwerkswitches (4) misst und die Relais abhängig vom Zustand der Portspannung schaltet.
